# EUROPÄISCHE PATENTANMELDUNG

(11) **EP 2 248 686 A2**
(43) Veröffentlichungstag der Anmeldung: **10.11.2010**
(21) Anmeldenummer: 10156333.6
(22) Anmeldetag: 12.03.2010
(51) Int. Cl.: B60C 23/04, B60S 5/04

(54) **Verfahren zum Überwachen eines Zustands von mindestens einem Reifen**

(30) Priorität: 08.05.2009 DE 102009002924
(71) Anmelder: Robert Bosch GmbH, 70442 Stuttgart (DE)
(72) Erfinder: Floreani, Bruno, 70190 Stuttgart (DE)

(57) **Zusammenfassung**

Es wird ein Verfahren zum Überwachen eines Zustands mindestens eines Reifens (6) eines Fahrzeugs vorgestellt, bei dem ein einzustellender Wert für den Luftdruck des mindestens einen Reifens (6) mit einem Steuergerät (10) des Fahrzeugs ermittelt und über elektromagnetische Wellen an eine Lufttankstelle (18) übermittelt wird. Es werden weiterhin eine Anordnung (2) zum Überwachen eines Zustands mindestens eines Reifens (6) für ein Fahrzeug, ein Computerprogramm und ein Computerprogrammprodukt beschrieben.

## Beschreibung

Die Erfindung betrifft ein Verfahren zum Überwachen eines Zustands mindestens eines Reifens eines Fahrzeugs, eine Anordnung zum Überwachen eines Zustands mindestens eines Reifens eines Fahrzeugs, ein Computerprogramm und ein Computerprogrammprodukt.

### Stand der Technik

Systeme zur direkten Reifendruckkontrolle bzw. -überwachung, sogenannte Tire Pressure Monitoring Systems, TPMS, umfassen im Reifen angeordnete Sensormodule, die zum Erfassen des Luftdrucks und zum Senden eines Werts des Luftdrucks ausgebildet sind. Außerdem sind Empfänger im Radkasten des Fahrzeugs zum Empfangen des Werts angeordnet. Derartige Systeme sind inzwischen Stand der Technik und weit verbreitet. In einigen Ländern sind sie auch gesetzlich vorgeschrieben.

Eine Einrichtung zur Überwachung eines Reifendrucks ist aus der Druckschrift US 7 321 840 B2 bekannt. Diese Einrichtung umfasst ein Kontrollmodul, das innerhalb des Rads angeordnet und zur Bestimmung eines geeigneten Reifendrucks bei einer Standardtemperatur ausgebildet ist. Weiterhin ist eine Kommunikationsverbindung zum Verbinden des Kontrollmoduls mit einem Prozessor außerhalb des Rads vorgesehen, über die der gewünschte Reifendruck an den Prozessor übermittelt wird. Außerdem umfasst diese Einrichtung Sensoren zum Bestimmen des Reifendrucks und der Standardtemperatur sowie Speichereinrichtungen zum Speichern der Standardtemperatur eines gemessenen und eines gewünschten Reifendrucks.

Ein Steuergerät für ein Kraftfahrzeug zur drahtlosen Kommunikation mit mindestens einer peripheren Einheit ist in der Druckschrift DE 10 2007 010 888 A1 beschrieben und umfasst mindestens eine Empfängereinheit zum Empfangen von Funksignalen für Standardanwendungen und mindestens eine Empfängereinheit zum Empfang von Funksignalen für sog. Long-Range-Anwendungen, die von der peripheren Einheit auf unterschiedlichen Frequenzen für die Standardanwendungen und die Long-Range-Anwendungen ausgesendet werden. Außerdem ist mindestens eine Antenne für jeweils eine oder beide Empfängereinheiten und eine Kontrolleinheit zur Steuerung der beiden Empfängereinheiten sowie zur Auswertung von Signalen von den beiden Empfängereinheiten vorgesehen.

### Offenbarung der Erfindung

Die Erfindung betrifft ein Verfahren zum Überwachen bzw. Kontrollieren eines Zustands mindestens eines Reifens eines Fahrzeugs, bei dem ein einzustellender Wert bzw. Sollwert für den Luftdruck des mindestens einen Reifens mit einem Steuergerät des Fahrzeugs, das im Fahrzeug angeordnet ist, ermittelt und ausgehend von dem Steuergerät über elektromagnetische Wellen an eine externe Lufttankstelle bzw. eine Anlage zur Luftbefüllung typischerweise automatisch übermittelt wird. Danach erfolgt eine Übermittlung des einzustellenden Werts drahtlos, üblicherweise per Funk. Eine Übermittlung des einzustellenden Werts kann mittels eines Signals vorgenommen werden.

In Ausgestaltung wird der einzustellende Wert des Luftdrucks für eine Luftbefüllung des mindestens einen Reifens eines Rads des Fahrzeugs verwendet. Dabei wird ein Ventil des mindestens einen Reifens über eine Gasleitung mit einer Luftdruckquelle, bspw. einem Kompressor, der Lufttankstelle verbunden. Zur Luftbefüllung wird zwischen der Luftdruckquelle und dem mindestens einen Reifen Luft ausgetauscht.

Während der Luftbefüllung wird ein aktueller Wert des Luftdrucks als Betriebsparameter des mindestens einen Reifens von einem Sensormodul erfasst und an das Steuergerät übermittelt. Der aktuelle Wert des Luftdrucks wird durch die Luftdruckquelle unter Berücksichtigung des einzustellenden Werts für den Luftdruck automatisch eingestellt und somit verändert. Dieser aktuelle Wert des Luftdrucks kann ebenfalls von dem Steuergerät des Fahrzeugs über elektromagnetische Wellen als Signal zu der Lufttankstelle gesendet werden. Falls der aktuelle Wert des Luftdrucks geringer als der einzustellende Wert ist, wird dem Reifen zur Druckerhöhung Luft zugeführt. Falls der aktuelle Wert höher als der einzustellende Wert ist, kann dieser aktuelle Wert durch Luftentnahme verringert werden.

Typischerweise wird ein Wert von mindestens einem Betriebsparameter, durch den eine Funktion des mindestens einen Reifens beeinflusst wird, von einem Sensor- oder Erfassungsmodul erfasst und der einzustellende Wert des Luftdrucks in Abhängigkeit bzw. unter Berücksichtigung des erfassten Werts des mindestens einen Betriebsparameters von dem Steuergerät, das mit dem Sensor- oder Erfassungsmodul Daten austauschen kann, ermittelt.

Die Erfindung betrifft auch eine Anordnung zum Überwachen bzw. Kontrollieren eines Zustands mindestens eines Reifens eines Fahrzeugs, die ein im Fahrzeug angeordnetes Steuergerät umfasst. Das Steuergerät ist dazu ausgebildet, einen einzustellenden Wert des Luftdrucks des Reifens zu ermitteln und über elektromagnetische Wellen an eine Lufttankstelle bzw. eine Anlage zur Luftbefüllung zu übermitteln.

Die Anordnung weist in einer Ausgestaltung mindestens ein typischerweise als Sensormodul ausgebildetes Erfassungsmodul auf, das dazu ausgebildet ist, einen Wert von mindestens einem Betriebsparameter, der einen Funktion des mindestens einen Reifens beeinflussen kann, zu erfassen und an das Steuergerät weiterzuleiten.

In der Regel ist das mindestens eine Erfassungs- oder Sensormodul dazu ausgebildet, als mindestens einen Betriebsparameter einen Wert des Luftdrucks des mindestens einen Reifens zu ermitteln. Dieses Erfassungsmodul ist typischerweise dem Fahrzeug zuzuordnen oder zugeordnet. Ein Sensormodul zum Erfassen des aktuellen Luftdrucks des Reifens kann bspw. innerhalb des Reifens oder am Reifen und/oder innerhalb des Rads oder am Rad, auf dem der Reifen aufgezogen ist, angeordnet sein. Ein mit dem Erfassungsmodul am Fahrzeug erfasster aktueller Wert des Luftdrucks kann mit dem Wert des einzustellenden Luftdrucks ausgehend von dem Steuergerät über elektromagnetische Wellen an die Lufttankstelle übertragen werden. Das mindestens eine Erfassungsmodul kann in weiterer Ausgestaltung dem Kompressor der Lufttankstelle zugeordnet sein und den aktuellen Luftdruck des mindestens einen Reifens indirekt über die Gasleitung erfassen.

Das üblicherweise im Fahrzeug anzuordnende elektronische Steuergerät, bspw. eine Fahrzeugelektronik oder eine Datenverarbeitungseinrichtung, ist als Komponente der Anordnung dazu ausgebildet, den Wert des einzustellenden Luftdrucks in Abhängigkeit von dem Wert des mindestens einen Betriebsparameters zu ermitteln. Der Wert des mindestens einen Betriebsparameters kann ebenfalls drahtlos über elektromagnetische Wellen an das elektronische Steuergerät von dem am oder im Reifen angeordneten Sensormodul zu dem Steuergerät übermittelt werden. Derartige Betriebsparameter, z. B. die Temperatur oder eine Masse des Fahrzeugs, können innerhalb des Fahrzeugs auch drahtgebunden an das Steuergerät übertragen werden.

In einer Ausführung der Erfindung weist die Anordnung eine am Fahrzeug anzuordnende oder angeordnete Antenne auf. Die Antenne ist als Sender und/oder Empfänger des Steuergeräts dazu ausgebildet ist, den einzustellenden Wert des Luftdrucks von dem elektronischen Steuergerät zu übernehmen und über elektromagnetische Wellen zu übermitteln, bspw. auszusenden. Es ist möglich, dass ein von einem Erfassungs- oder Sensormodul erfasster Wert des mindestens einen Betriebsparameters ebenfalls über elektromagnetische Wellen gesendet und von der Antenne des Steuergeräts empfangen wird.

Als weitere Komponente der Anordnung kann ein in der Lufttankstelle anzuordnende Antenne vorgesehen sein, die dazu ausgebildet ist, den von dem Steuergerät übermittelten Wert des einzustellenden Luftdrucks zu empfangen und an eine als Kontrollmodul für die Luftdruckquelle ausgebildete Komponente der Lufttankstelle zu übermitteln.

Mit der Erfindung wird ein automatisiertes Reifenluftdrucksystem zur Umsetzung einer kabellosen Kommunikation zwischen einem Fahrzeug mit mindestens einem mit Luft zu befüllenden Reifen und einer Lufttankstelle bereitgestellt. Die Erfindung betrifft somit auch eine funktionale Erweiterung der Lufttankstelle unter drahtloser Vernetzung der Lufttankstelle mit einer Vorrichtung zur Kontrolle des Luftdrucks mindestens eines Reifens (TPMS), um den optimalen Reifendruck automatisiert einzustellen.

Die genannte Vorrichtung zur Überwachung bzw. Kontrolle des Luftdrucks umfasst das mindestens eine Sensor- oder Erfassungsmodul sowie das Steuergerät zur Ermittlung des einzustellenden Werts des Luftdrucks. Dieser einzustellende Wert kann nun direkt an die Lufttankstelle übermittelt werden. Durch die vorgesehene Kontrolle des Luftdrucks ergibt sich u. a. eine erhöhte Fahrsicherheit, ein geringerer Kraftstoffverbrauch sowie ein geringerer Reifenverschleiß. Das Befüllen des Reifens und das Einstellen des Luftdrucks erfolgt nun nicht mehr manuell an der Lufttankstelle. Dieses Befüllen kann fehleranfällig sein und auch manche Nutzer überfordern. Im Rahmen der Erfindung ist ein automatisches Kontrollieren und Einstellen des Luftdrucks während der Luftbefüllung möglich.

Durch die Vernetzung bzw. drahtlose Verbindung einer vorhandenen Kfz-Elektronik und der Vorrichtung zur Kontrolle des Luftdrucks (TPMS) und der erweiterten Funktion der Lufttankstelle ergibt sich ein erhöhter Bedienkomfort für den Nutzer und die Möglichkeit, die Funktion der Vorrichtung weitergehend zu nutzen.

Im Fahrzeug sind in Ausgestaltung ein TMPS-Sensormodul und eine als TPMS-Empfänger ausgebildete Antenne angeordnet. Die Kommunikation zwischen dem TPMS-Sensormodul und dem TPMS-Empfänger erfolgt innerhalb des Fahrzeugs über Hochfrequenz-Signale. Der TPMS-Empfänger ist mit dem Bordnetz und somit auch mit dem Steuergerät des Fahrzeugs verbunden. Durch die Vernetzung über HF-Signale zwischen dem Fahrzeug und der Lufttankstelle gibt die Fahrzeugelektronik der Luftdrucktankstelle den einzustellenden Luftdruck je Reifen vor. Der erweiterte TMPS-Empfänger dient dabei auch als Sender in Richtung der erweiterten Lufttankstelle. Die Lufttankstelle empfängt den Wert über ein standardisiertes Protokoll und stellt den Luftdruck entsprechend ein. Ein manuelles Nachregeln durch den Nutzer ist nicht mehr notwendig.

Mit der Bordelektronik kann über vernetzte Funktionen der einzustellende Luftdruck weiter optimiert werden. Für den einzustellenden Wert des Luftdrucks können verschiedene Betriebsparameter und/oder Kriterien berücksichtigt werden.

Die Betriebsparameter umfassen z. B. einen Fahrzeugladezustand, ermittelt aus Chassis-Informationen (ABS/ESP/Stoßdämpfer). Der Fahrzeugladezustand umfasst einen Wert einer Masse des Fahrzeugs und ggf. eine Verteilung der Masse im Fahrzeug, die sich auf mehrere Räder und somit Reifen des Fahrzeugs unterschiedlich auswirkt. Andere Betriebsparameter können Gurtschlossinformationen, den Fahrstil des Fahrers, ermittelt über den Bordcomputer, Durchschnittsgeschwindigkeiten, eine Fahrprogrammvorwahl bei Automatikfahrzeugen oder eine Außentemperatur umfassen. Eine zu fahrende Route kann mit dem Navigationsgerät durch Auswahl eines Ziels ermittelt werden, somit kann eine zu erwartende Straßen- und/oder Verkehrssituation ebenfalls als ein möglicher Betriebsparameter berücksichtigt werden. Demnach kann bspw. ermittelt werden, ob eine nächste Fahrt im Stadtverkehr oder auf der Autobahn erfolgt.

Bei einer Anwendung der Erfindung meldet ein einfaches, ggf. auf dem Markt befindliches Reifendruckventil als Sensormodul den Wert des Luftdrucks an die vorhandene und wie beschrieben zu erweiternde zentrale Fahrzeugelektronik.

Das Steuergerät bzw. die zentrale Fahrzeugelektronik ermittelt den einzustellenden Wert des Luftdrucks und steuert die Luftdruckquelle per Funk. Mit dem Steuergerät wird unter Nutzung einer schon vorhandenen Infrastruktur der Fahrzeugzustand ermittelt und der einzustellende Wert des Luftdrucks zentral bestimmt. Erst diese Partitionierung erlaubt eine sinnvolle Anpassung an das einzelne Fahrzeug. Nicht der Reifen mit seinem eingebauten Reifendrucksensor bestimmt den Reifensolldruck, sondern das Steuergerät mit einem Bordcomputer oder einer entsprechenden Recheneinrichtung.

Die beschriebene Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden. Außerdem ist es möglich, dass Schritte des Verfahrens als Funktionen einzelner Komponenten der Anordnung oder der gesamten Anordnung realisiert werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Anordnung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, bspw. in einer erfindungsgemäßen Anordnung, ausgeführt wird.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnung

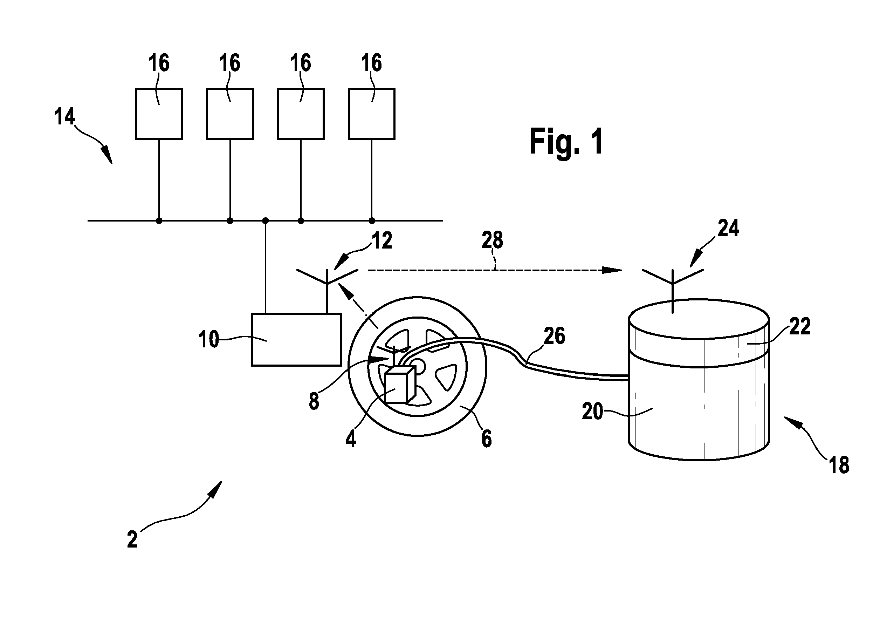

Figur 1 zeigt in schematischer Darstellung eine Ausführungsform einer erfindungsgemäßen Anordnung.

### Ausführungsform der Erfindung

Die Erfindung ist anhand einer Ausführungsform in der Zeichnung schematisch dargestellt und wird nachfolgend unter Bezugnahme auf die Zeichnungen ausführlich beschrieben.

Die in Figur 1 schematisch dargestellte Ausführungsform einer erfindungsgemäβen Anordnung 2 umfasst ein Sensormodul 4, das hier als Drucksensor ausgebildet und einem Reifen 6 eines nicht weiter dargestellten Fahrzeugs zugeordnet ist. Dieses Sensormodul 4 ist dazu ausgebildet, einen Wert des Luftdrucks des Reifens, u. a. auch bei Fahrbetrieb des Fahrzeugs, zu ermitteln. An dem Sensormodul 4 ist eine erste Antenne 8 angeordnet, die dazu ausgebildet ist, den aktuell ermittelten Wert des Luftdrucks des Reifens 6 über elektromagnetische Wellen zu einem Steuergerät 10 des Fahrzeugs zu übertragen. Zum Empfang des Werts des Luftdrucks weist das Steuergerät ebenfalls eine Antenne 12 auf. Über ein Bordnetz 14 des Fahrzeugs ist das Steuergerät 10 mit weiteren Erfassungsmodulen 16 verbunden, die dazu ausgebildet sind, weitere für eine Funktion des Reifens 6 erforderliche Betriebsparameter zu erfassen und über das Bordnetz 14 an das Steuergerät 10 zu übermitteln. In Abhängigkeit des aktuellen Werts des Luftdrucks sowie aktueller Werte für die weiteren Betriebsparameter wird von dem Steuergerät 10 ein aktuell einzustellender Wert bzw. Sollwert des Luftdrucks für den Reifen 6 ermittelt.

Falls der aktuell erfasste Wert des Luftdrucks des Reifens 6 von dem einzustellenden Wert für den Luftdruck abweicht, kann einem Fahrer des Fahrzeugs über das Steuergerät 10 eine entsprechende Nachricht übermittelt werden, so dass der Fahrer mit dem Fahrzeug zu einer Lufttankstelle 18 fahren kann. Diese Lufttankstelle 18 umfasst in der vorliegenden Ausführungsform eine Luftdruckquelle 20, die bspw. als Kompressor ausgebildet sein kann, ein Kontrollmodul 22 für die Luftdruckquelle 20 sowie eine mit dem Kontrollmodul 22 verbundene Antenne 24 zum Austausch elektromagnetischer Wellen.

Zum Einstellen des einzustellenden Luftdrucks für den Reifen 6 wird an der Lufttankstelle 18 ein Ventil des Reifens 6 über eine Gasleitung 26, bei der es sich üblicherweise um einen Luftschlauch handelt, mit der Luftdruckquelle 20 der Lufttankstelle 18 verbunden.

Zur Kontrolle des einzustellenden Luftdrucks erfolgt über die Antennen 12, 24 des Steuergeräts 10 und der Lufttankstelle 18 ein Austausch von Signale, die einen einzustellenden Wert des Luftdrucks umfassen. Eine drahtlose Übermittlung dieser Signale erfolgt über elektromagnetische Wellen, wobei ein typischerweise standardisiertes Protokoll 28 zur Anwendung kommt.

Ausgehend von dem Steuergerät 10 wird dem Kontrollmodul 22 der Lufttankstelle 18 der einzustellende Wert für den Luftdruck des Reifens 6 übermittelt. Der aktuelle Wert des Luftdrucks wird dabei von dem Sensormodul 4 überwacht. In der vorliegenden Ausführungsform ist weiterhin vorgesehen, dass der Luftdruck des Reifens 6 ergänzend über die Gasleitung 26 indirekt über die Luftdruckquelle 20 erfasst werden kann. Allerdings ist eine direkte Erfassung des Luftdrucks über das Sensormodul 4 genauer.

In Abhängigkeit davon, ob der aktuelle Wert des Luftdrucks größer oder kleiner als der einzustellende Luftdruck ist, wird die Luftdruckquelle 20 kontrolliert. Somit führt die Luftdruckquelle 20 über die Gasleitung 26 dem Reifen 6 Luft zu, falls der aktuelle Wert des Luftdrucks geringer als der einzustellende Wert des Luftdrucks ist. Falls der aktuelle Wert des Luftdrucks größer als der einzustellende Wert des Luftdrucks ist, wird dem Reifen 6 von der Luftdruckquelle 20 über die Gasleitung 26 Luft entnommen.

In einer Ausführungsform des erfindungsgemäßen Verfahrens wird zum Erreichen des einzustellenden Luftdrucks von dem Steuergerät 10 entweder eine Anforderung zur Erhöhung des Luftdrucks oder zur Verringerung des Luftdrucks bereitgestellt. Diese Anforderung kann neben dem aktuellen Wert des Luftdrucks sowie dem einzustellenden Wert des Luftdrucks mit dem Signal als Zusatzinformation an die Lufttankstelle 18 übermittelt werden. Alternativ oder ergänzend kann eine geforderte Tendenz zur Änderung und der daraus resultierenden Einstellung des Luftdrucks auch von dem Kontrollmodul 22 bereitgestellt werden. Der Wert des aktuellen Luftdrucks wird der Luftdruckquelle 20 von dem Steuergerät 10 bereitgestellt, kann aber auch durch die Luftdruckquelle 20 bestimmt werden. Eine Regelung des Luftdrucks für den Reifen 6 wird solange fortgeführt, bis der gewünschte, einzustellende Luftdruck des Reifens 6 eingestellt ist.

## Patentansprüche

1. Verfahren zum Überwachen eines Zustands mindestens eines Reifens (6) eines Fahrzeugs, bei dem ein einzustellender Wert für den Luftdruck des mindestens einen Reifens (6) mit einem Steuergerät (10) des Fahrzeugs ermittelt und über elektromagnetische Wellen an eine Lufttankstelle (18) übermittelt wird.

2. Verfahren nach Anspruch 1, bei dem der einzustellende Wert des Luftdrucks für eine Luftbefüllung des mindestens einen Reifens (6) verwendet wird, wobei ein Ventil des mindestens einen Reifens (6) über eine Gasleitung (26) mit einer Luftdruckquelle (20) der Lufttankstelle (18) verbunden und zwischen der Luftdruckquelle (20) und dem mindestens einen Reifen (6) Luft ausgetauscht wird.

3. Verfahren nach Anspruch 2, bei dem während der Luftbefüllung ein aktueller Wert des Luftdrucks des mindestens einen Reifens (6) erfasst und durch die Luftdruckquelle (20) unter Berücksichtigung des einzustellenden Werts für den Luftdruck eingestellt wird.

4. Verfahren nach einem der voranstehenden Ansprüche, bei dem ein Wert von mindestens einem Betriebsparameter, durch den eine Funktion des mindestens einen Reifens (6) beeinflusst wird, erfasst und der einzustellende Wert des Luftdrucks in Abhängigkeit des erfassten Werts des mindestens einen Betriebsparameters von dem Steuergerät (10) ermittelt wird.

5. Anordnung zum Überwachen eines Zustands mindestens eines Reifens (6) eines Fahrzeugs, die ein Steuergerät (10) des Fahrzeugs umfasst, wobei das Steuergerät (10) dazu ausgebildet ist, einen einzustellenden Wert des Luftdrucks des Reifens (6) zu ermitteln und über elektromagnetische Wellen an eine Lufttankstelle (18) zu übermitteln.

6. Anordnung nach Anspruch 5, die mindestens ein Erfassungsmodul (4, 16) aufweist, das dazu ausgebildet ist, einen Wert von mindestens einem Betriebsparameter des mindestens einen Reifens (6) zu erfassen und an das Steuergerät (10) zu übermitteln.

7. Anordnung nach Anspruch 6, bei der das mindestens eine Erfassungsmodul (4, 16) dazu ausgebildet ist, als mindestens einen Betriebsparameter einen Wert des Luftdrucks des mindestens einen Reifens (6) zu erfassen.

8. Anordnung nach einem der Ansprüche 5 bis 7, die eine am Fahrzeug anzuordnende Antenne (8) aufweist, die dazu ausgebildet ist, den einzustellenden Wert des Luftdrucks per Funk zu übermitteln.

9. Anordnung nach einem der Ansprüche 5 bis 8, die eine in der Lufttankstelle (18) anzuordnende Antenne (12) aufweist, die dazu ausgebildet ist, den übermittelten Wert des einzustellenden Luftdrucks zu empfangen.

10. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (2) nach einem der Ansprüche 5 bis 9, ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (2) nach einem der Ansprüche 5 bis 9, ausgeführt wird.
